(19) Europäisches Patentamt
European Patent Office
Office européen des brevets

(11) Veröffentlichungsnummer: **0 421 217 B1**

(12) **EUROPÄISCHE PATENTSCHRIFT**

(45) Veröffentlichungstag der Patentschrift: **20.07.94**

(51) Int. Cl.[5]: **C08G 18/10**, C08G 18/12, D01F 6/70, C08G 18/32, C08G 18/42, C08G 18/44

(21) Anmeldenummer: **90118260.0**

(22) Anmeldetag: **22.09.90**

# (54) Elasthanfasern hoher Dehnbarkeit und Festigkeit und ein Verfahren zu ihrer Herstellung.

(30) Priorität: **03.10.89 DE 3932949**

(43) Veröffentlichungstag der Anmeldung:
**10.04.91 Patentblatt 91/15**

(45) Bekanntmachung des Hinweises auf die Patenterteilung:
**20.07.94 Patentblatt 94/29**

(84) Benannte Vertragsstaaten:
**DE FR GB IT**

(56) Entgegenhaltungen:
**EP-A- 0 000 510**
**EP-A- 0 292 772**
**EP-A- 0 321 288**
**EP-A- 0 364 052**
**DE-A- 1 964 998**

(73) Patentinhaber: **BAYER AG**

**D-51368 Leverkusen(DE)**

(72) Erfinder: **Frauendorf, Beatrix, Dr.**
**Charlottenburger Strasse 34**
**D-5090 Leverkusen(DE)**
Erfinder: **Korte, Siegfried, Dr.**
**Engstenberger Hoehe 3**
**D-5068 Odenthal(DE)**
Erfinder: **Süling, Carlhans, Dr.**
**Carl-Leverkus-Strasse 10**
**D-5068 Odenthal(DE)**
Erfinder: **Dauscher, Rudi, Dr.**
**Pommern-Allee-39**
**D-4047 Dormagen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft ein Verfahren zur Herstellung hochdehnbarer Elasthanfasern (Spandexfasern) auf Basis segmentierter Polyurethan(harnstoff)elastomerer mit erhöhter Dehnbarkeit und trotzdem hohen Festigkeiten, ausgewogenen elastischen Eigenschaften sowie ausgezeichnetem thermischen und hydrothermischen Verhalten, dadurch gekennzeichnet, daß man zu ihrer Herstellung als Makrodiole höhermolekulare, Carbonat-verknüpfte, blockartig aufgebaute Polyester- oder Polyesterether-diole mit Molekulargewichten von 3.300 bis 7.000, vorzugsweise 3.500 bis 6.500, mit Diisocyanaten wie 4,4′-Diphenylmethandiisocyanat im molekularen Verhältnis 1:2,5 bis 1:4,5, vorzugsweise unter Verwendung von Katalysatoren und in Lösungsmitteln umsetzt und diese NCO-Prepolymere mit NCO-Gehalten von 2,10 bis 4,0 % NCO dann mittels (cyclo)alipathischer Diamine, vorzugsweise Ethylendiamin, sowie gegebenenfalls Monoamin-Kettenabbrechern, zu Polyurethan(harnstoff)elastomeren in hochpolaren Lösungsmitteln kettenverlängert.

Weiterer Erfindungsgegenstand sind die nach dem Verfahren erhältlichen Elasthanfasern hoher Dehnbarkeit.

Unter Elasthanfasern (in USA: Spandexfasern) werden Fäden verstanden, die zumindest 85 Gew.-% aus segmentierten Polyurethan(harnstoff)-elastomeren bestehen. Derartige Elasthanfasern werden üblicherweise hergestellt, indem zunächst ein langkettiges Diol (Makrodiol) mit einem Diisocyanat endständig verkappt wird, so daß man ein Makrodiisocyanat (NCO-Prepolymer) erhält. Das NCO-Pepolymer wird dann in einem zweiten Schritt mit einem Kettenverlängerer, welcher üblicherweise aus einem Diamin besteht, zu einem hochmolekularen Polyurethanharnstoff umgesetzt. Diese Polyurethanharnstoffe sind so aufgebaut, daß das Makromolekül eine Segmentstruktur aufweist, d. h. aus hochschmelzenden kristallinen und niederschmelzenden amorphen Segmenten (Hartsegmente bzw. Weichsegemente) besteht. Die Hartsegmente wirken dann aufgrund ihrer Kristallinität und hohen Schmelzpunkte als Fixpunkte des Netzwerks und sind damit maßgebend für die Festigkeit der aus den Polymeren hergestellten Formkörper. Die Weichsegmente hingegen, deren Glastemperatur unterhalb der Gebrauchstemperatur liegen muß, sind für die Elastizität/Dehnbarkeit der Elastomeren maßgebend.

Üblicherweise werden zum Aufbau der Weichsegmente handelsüblicher Elasthanfasern, Polyester- und Polyetherdiole eingesetzt. Die Molekulargewichte dieser Polyester- oder Polyetherdiole liegen meist in der Größenordnung von etwa 2.000, womit auch Fäden erzeugt können, die üblicherweise Dehnbarkeiten zwischen 360 und 500 % besitzen.

Für besondere Anwendungszwecke, bei denen besonders hohe Dehnbarkeiten erwünscht sind, werden Makrodiole eingesetzt, die höhere Molekulargewichte, z.B. bis ca. 4.000 besitzen. Auch noch höhere Molekulargewichte sind teilweise vorbeschrieben.

Nachteilig bei diesen sogenannten Langzug-Elasthanen ist jedoch, daß durch die Vergrößerung der weichen Segmente die Festigkeiten der aus diesen Materialien erzeugten Fasern deutlich absinken, so daß die Fasern nicht mehr für alle textilen Einsatzzwecke tauglich sind und sich auch viele der elastischen, thermischen und hydrothermischen Eigenschaften negativ verändern.

Eine theoretische Möglichkeit, dieses Festikeitsproblem zu umgehen, besteht darin, den Hartsegmentanteil im Polymer ebenfalls zu erhöhen. Dieser Methode sind jedoch dadurch technische Grenzen gesetzt, daß bei einer Erhöhung des molekularen Verhältnisses von Makrodiol zu Diisocyanat von üblicherweise ca. 1:1,5 bis 1:1,9 auf über 1:2,5 es nach der Kettenverlängerung zu Mikrophasentrennungen bzw. Kristallalisationsphänomenen durch ausfallende Oligoharnstoffe kommt. Derartige Elasthanlösungen sind dann trübe und besitzen zum Teil eine extrem hohe Viskosität oder verpasten in mehr oder minder kurzer Zeit zu einem nicht mehr spinnfähigen Gel. Sie sind dann im Spinnverfahren nicht mehr verarbeitbar.

Desweiteren wird durch die Erhöhung des Hartsegmentanteils auch die Bruchdehnung des Elasthanfadens wieder herabgesetzt, wie z.B. in Text.-Praxis Int. 36 (1981) Seite 842 beschrieben ist. Dieser Effekt ist natürlich ganz und gar unerwünscht.

Die Verwendung von überschüssigen Diisocyanat bei der Herstellung von Elasthanrohstoffen ist prinzipiell bekannt; so wird z.B. in der DE-AS 1 183 196 beschrieben, daß man nach der Herstellung des NCO-Prepolymeren (durch Reaktion von Diisocyanaten mit den Makrodiolen im stöchiometrischen Verhältnis 2:1) weiteres überschüssiges Diisocyanat dem Reaktionsgemisch hinzufügt.

Die erfindungsgemäßen Elasthane unterscheiden sich von den segmentierten Polyharnstoffen der DE-AS 1 183 196 unter anderem dadurch, daß die NCO-Prepolymersynthese im OH/NCO-Molverhältnis 1:>2,0 durch direkte Umsetzung des überschüssigen Isocyanates mit dem Makrodiol erfolgt. Damit wird im erfindungsgemäßen Verfahren vermieden, daß sich Urethanbrückenglieder nicht oder in nur sehr untergeordnetem Maße ausbilden können.

Um die technisch wertvollen hohen Dehnungen bei gleichzeitig günstigen elastischen thermischen und hydrothermischen Werten zu erhalten, werden erfindungsgemäß ausgewählte langkettige Diole mit blockartigem Aufbau und mit Carbonatverknüpfungsgliedern verwendet, wobei die langkettigen Diole sehr hohe Molekulargewichte aufweisen und durch gleichzeitige Umsetzung mit einer deutlich über 1:2 (OH:NCO-Verhältnis) liegenden Diisocyanatmenge eine Verknüpfung von höhermolekularen Diolen über Urethangruppen praktisch ausgeschlossen ist. Dadurch entfielen NH.CO.O-Gruppen, welche im wesentlichen die Dehnbarkeit reduzieren, andererseits werden aber durch die Carbonatgruppen Kristallisationstendenzen der langkettigen Polyester oder Polyether so gestört, daß eine Versteifung/Dehnungsbegrenzung durch Dehnungskristallisation in nicht so starkem Maße eintritt, wie in Polyestern/Polyethern vergleichbaren Molekulargewichts ohne die Carbonatverknüpfungen.

Segmentierte Elasthanrohstoffe sind z.B. auch in der US 2 929 804 beschrieben, die jedoch - nachteilig für das Dehnungsverhalten - über Urethangruppen vorverlängerte Weichsegmente besitzen.

Als Komponenten der erfindungsgemäßen Polyurethan(harnstoffe) werden somit langkettige Diole verwendet, die keine Urethangruppen enthalten und die nicht auf Wasserstoffbrückenbildung dieser Urethansegmente in ihrer Extensibilität und Ver-/Entknäulungstendenz behindert werden. Die gute Viskositätsbeständigkeit der erfindungsgemäßen Elasthanlösungen ist vermutlich wesentlich mit auf diese Strukturmerkmale zurückzuführen. Durch die spezifische Verknüpfung zweier Diolblöcke über Carbonatgruppierungen wird aber auch die (unerwünschte) Kristallisationstendenz der Makrodiole deutlich vermindert.

Elasthanrohstoffe, die durch Kettenverlängerung mit Hydrazin oder Hydrazinderivaten erhältlich sind, können - bedingt durch das Syntheseverfahren, das z.B. in der DE-AS 1 123 467 beschrieben ist - Semicarbazidhartsegmente enthalten. Diese Produkte unterscheiden sich in der Konstitution von Harnstoffsegmenten. Solche Elasthane bieten bei der thermischen Verformung von Textilien auf Basis von Polyamid/Elasthan große Nachteile, d.h. zu tief liegende Erweichungstemperaturen gegenüber den erfindungsgemäßen harnstoffhaltigen Produkten, insbesondere gegenüber solchen auf Basis von Ethylendiamin als (Haupt)Verlängerungsmittel.

Der Einsatz längerkettiger Polyesterdiole als Weichsegment (z.B. Kondensationsprodukte aus Adipinsäure und verschiedenen niedermolekularen Diolen wie Hexandiol-1,6 (H), Butandiol-1,4 (B), Neopentylglykol (2,2-Dimethylpropandiol-1,3) (N), oder Ethylenglykol mit Molekulargewichten von 2.000-8.000 ist prinzipiell bekannt. Sie zeigen jedoch Nachteile gegenüber den erfindungsgemäßen, carbonatverknüpften blockartigen Polyestern oder Polyesterethern. Für Polyurethane allgemein werden auch spezielle längerkettige Polyester-und Polyether-Polycarbonatdiole beschrieben. So wird in der DE-OS 3 717 060 die Herstellung und Verwendung für Polyurethankunststoffe von Polyethercarbonatdiolen mit Molekulargewichten von 500-12.000 beschrieben, wobei die Makrodiole aus Hexamethylengruppen und gegebenenfalls bis zu 50 Mol-% der Hexamethylengruppen aus Penta-, Hepta-, Octa-, Nona- oder Decamethylengruppen bestehen, die statistisch, alternierend oder blockweise durch Ether- und Carbonatgruppen verknüpft sind.

In der US-PS 4 463 141 werden Polyether-Carbonat-Diole der allgemeinen Strukturformel

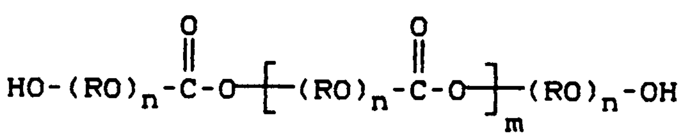

mit

R = $-(CH_2)_4-$
n = 7-45
m = 0-18

als Ausgangsstoffe für Polyurethane genannt.

In der DE-AS 1 694 080 wird ein über Carbonatgruppen verknüpfter 1,6-Hexandiol/Adipinsäure-Polyester zur Herstellung vernetzter Polyurethane nach Schmelzgießverfahren beschrieben. Derartige, weiterhin auch in der DE-OS 3 717 060 und US 4 463 141 beschriebene, längerkettige Makrodiole sind aufgrund ihrer hohen Kristallisationstendenz für den Einsatz als Weichsegment in Elasthanfäden aber weniger geeignet. Desweiteren wird in den US-Patentschriften 4 463 141 und 4 476 293 die Herstellung und Verwendung von über Carbonatgruppen verknüpften Polytetramethylenetherdiolen bzw. Copolyetherdiolen auf dieser Basis für Polyurethanelastomerfäden beansprucht, wobei der Copolyether aus mindestens 20 Gew.-% Tetramethylenethersequenzen und bis zu maximal 80 Gew.-% aus anderen Alkylenether-Sequenzen auf Basis von Ethylenoxid oder Propylenoxid besteht. In Beispielen werden Butandiol-kettenverlängerte Schmelzpolyurethane beschrieben.

In der DE-OS 2 712 435 wird ein Verfahren zur Herstellung von über Carbonatgruppen verknüpften Polyesterdiolen mit Kohlensäurearylester-Endgruppen der allgemeinen Formel

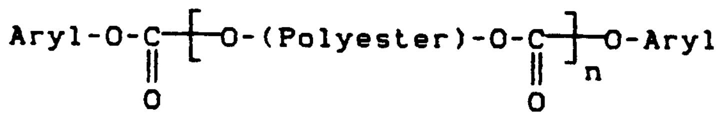

mit

Ar = substituierter oder unsubstituierter Arylrest mit 6-18 C-Atomen

n = 2-20

beschrieben.

Diese sind nicht Erfindungsgegenstand; das Verfahren kann jedoch zur Herstellung von Zwischenstufen für die Herstellung der erfindungsgemäß zu verwendenden Block-Makrodiole benutzt werden.

Hochmolekulare Poly(ether)ester-Carbonate mit sehr hohen Molekulargewichten über 20.000 werden in der US-PS 4 192 940 und von Hardt et. al in Angew. Chem., 94, 159 ff, (1982) offenbart.

Die EP-A-321 288 beschreibt die Reaktion eines Makrodiols mit einem Diisocyanat und in einer nachfolgenden Stufe Kettenverlängerung mit Diaminen.

Es wurde nun überraschend gefunden, daß sich Elasthanfäden mit besonderen Eigenschaften wie hohen Dehnbarkeiten, verbesserten Hydrolyse- und Mikrobenbeständigkeiten, hohen Festigkeiten und verbesserten thermischen Eigenschaften (z.B. Heat Distortion Temperature (HDT), Heißreißzeiten oder Heißwasserspannungsabfall) sowie verbesserter bleibender Dehnung im Vergleich zu normal aufgebauten Elasthanen erzeugen lassen, wenn man NCO-Prepolymere aus langkettigen, höhermolekularen Diolen (Makrodiolen) spezieller Blockstruktur, wie nachfolgend charakterisiert, mit Molekulargewichten von > 3.300-7.000, vorzugsweise 3.500-6.500, und Diisocyanaten (vorzugsweise 4,4-Diphenymethandiisocyanaten) in hohen molaren Verhältnissen OH:NCO von 1:>2,10, vorzugsweise 1:2,15-1:4,0, insbesondere 2,5-3,50, besonders bevorzugt unter Verwendung von Lewis-Säuren oder Lewis-Basen-Katalysatoren in hochpolaren Lösungsmitteln wie Dimethylformamid oder bevorzugt Dimethylacetamid, umsetzt und diese Lösungen nach an sich bekannten Verfahren verspinnt.

Völlig überraschend war, daß sich derart hergestellte NCO-Prepolymere ohne Schwierigkeiten zu Polyurethan(harnstoffen) mit Diaminen in Lösung kettenverlängern lassen, die über verlängerte Zeiträume im Vergleich zu nicht-carbonatverknüpften Makrodiolen keine Phasenseparationen zeigen, Gelteilchen-frei sind und farblos bleiben und so einer verbesserten Verspinnung zugänglich sind und verbesserte Elastomerfädeneigenschaften ergeben.

Von Vorteil ist, daß durch bestimmte Abmischungen der Blockdesmophene untereinander, aber auch gegebenenfalls unter Zumischung von nicht-carbonatverknüpften Makrodiolen in Mengen bis 50 Gew.-%, bestimmte elastische, thermische und hydrothermische Eigenschaften des Elasthans und ein günstiges Lösungsverhalten eingestellt werden, ohne daß dabei die für eine Reihe von Anwendungszwecken von Elastanfäden erwünschten hohen Dehnungen und Festigkeiten bei gleichzeitig günstigen sonstigen Eigenschaften verloren gehen.

Völlig überraschend war auch, daß man durch Umsetzung der erfindungsgemäß zu verwendenden, carbonatverknüpften, blockartig aufgebauten Makrodiole mit Diisocyanaten in hohen Verhältnissen, entsprechend relativ hohen NCO-Gehalten im NCO-Prepolymer, bei Verwendung von Katalysatoren nicht nur kurze Reaktionszeiten bei der NCO-Prepolymerbildung erzielt, sondern überraschenderweise gleichzeitig die Festigkeiten und die Dehnung der so hergestellten Elastanfasern besonders erhöhen kann. Besonders überraschend war dabei die Tatsache, daß nach Kettenverlängerung mit Diaminen Elastomerlösungen mit verbesserter Lagerstabilität erhalten werden, wenn ein Katalysator verwendet wird. Weiterhin werden bei Mitverwendung von Katalysatoren farblose und farblos bleibende Elastomerlösungen erhalten.

Gegenstand der Erfindung ist daher ein Verfahren zur Herstellung von Elastanfäden durch Umsetzung von Makrodiolen, überschüssigen Mengen an Diisocyanaten in Lösungsmittel zu einem NCO-Prepolymer und dessen Kettenverlängerung mit Diaminen in hochpolaren Lösungsmitteln und Verspinnung der erhaltenen Lösung, gegebenenfalls unter Zusatz üblicher Additive, dadurch gekennzeichnet, daß

a) Makrodiole, die im Mittel über 1 bis 4 Carbonatgruppen verknüpft, blockartig aus vorgebildeten, gleichen oder verschiedenen Polyesterdiolen oder aus Polyesterdiolen und Polyetherdiolen aufgebaut sind und ein Molekulargewicht von >3.300 bis 7.000, vorzugsweise 3.500 bis 6.500 und insbesondere 3.500 bis 6.000, und einen Schmelzpunkt unter 50 °C, vorzugsweise unter 45 °C, aufweisen,

b) mit organischen Diisocyanaten, vorzugsweise aromatischen, symmetrisch aufgebauten Diisocyanaten, insbesondere 4,4'-Diphenylmethandiisocyanat,

c) in organischen, inerten Lösungsmitteln, vorzugsweise Dimethylformamid und Dimethylacetamid,

d) und unter Zusatz von 0,002 bis 0,15 Gew.-%, bezogen auf das Makrodiol a), Katalysatoren für die OH/NCO-Reaktion, insbesondere 0,005 bis 0,10 Gew.-% an zinnorganischen Katalysatoren,

in einem OH/NCO-Verhältnis von 1 : >2,10 bis 1 : 4,5, bevorzugt 1 : 2,15 bis 1 : 4,0 und insbesondere 1 : 2,5 bis 1 : 3,5, umgesetzt werden, daß ein NCO-Prepolymer mit einem NCO-Gehalt von >2,10 bis 4% NCO (bezogen auf den Feststoffgehalt), vorzugsweise 2,15 bis 3,5 % NCO im NCO-Prepolymer-Feststoff, erhalten wird, und

e) dieses NCO-Prepolymer in einer nachfolgenden Stufe in Lösungsmitteln mittels (cyclo)aliphatischen Diaminen, vorzugsweise Ethylendiamin als Hauptkomponente, gegebenenfalls unter Zusatz von Kettenabbrechern, zur viskosen Polyurethan(harnstoff)-Elastomerspinnlösung umgesetzt wird und diese anschließend, vorzugsweise im Trockenspinnprozeß, versponnen wird.

Die erfindungsgemäßen, carbonatverknüpften, blockartig aufgebauten Makrodiole a) besitzen dabei vorzugsweise die Blockstrukturen der Typen W bis Z

W 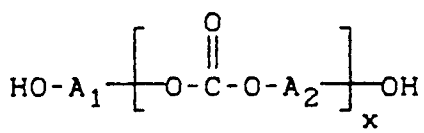

X 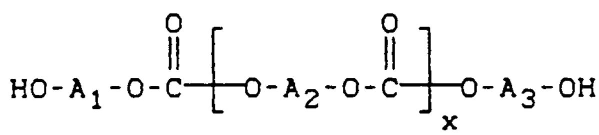

Y 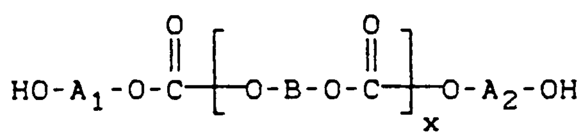

Z 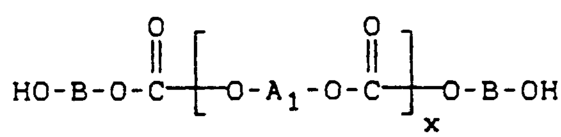 ,

mit

| | |
|---|---|
| $A_1$, $A_2$, $A_3$ | eines vorgebildeten Polyesterdiols aus Dicarbonsäuren und niedermolekularen Diolen, mit einem Molekulargewicht von jeweils 800 bis 3.500, vorzugsweise 1.000 bis 3.330, wobei $A_1 = A_2 = A_3$, $A_1 = A_2 \neq A_3$ und $A_1 = A_3 \neq A_2$ sein kann, |
| B | Rest eines Polyetherdiols auf Basis Polyoxytetramethylendiolen oder seiner Copolyether, mit Molekulargewichten von 800 bis 3.000 und |
| x | 1, 2, 3 oder 4 ist, aber so gewählt ist, daß im Mittel nicht mehr als 4 Carbonatgruppen, vorzugsweise < 3 Carbonatgruppen im Makrodiol a) enthalten sind. |

Gegenstand der Erfindung sind auch Elasthanfäden erhöhter Dehnung, guter thermischer und hydrothermischer Eigenschaften, welche nach dem beanspruchten Verfahren, bevorzugt nach einem Trockenspinnprozeß, erhalten werden.

Die erfindungsgemäß eingesetzten carbonatverknüpften Polyester/Ether-Blockdiolen werden wie folgt hergestellt:

Das Syntheseprinzip von Blockdesmophenen aus Polyesterdiolen der Strukturformeln W, X (s. vorliegende Formelschemata) wird in Beispiel 1a,b) beschrieben.

Das Syntheseprinzip eines Blockdesmophens aus verschiedenen Blöcken, nämlich Polyester- und Polyesterdiolblöcken der Strukturformeln Y, Z (s. vorliegende Formelschemata) wird in Beispiel 1c) und 1d) beschrieben.

Zur Carbonatverlängerung sind Polyesterdiole mit Molekulargewichten von 800 bis 3.500, vorzugsweise 1.000 bis 3.300, aus z.B. Dicarbonsäure/Diol/Polyestern geeignet. Auch Valero- oder Caprolactonpolyester

oder Mischpolyester auf Basis ε-Caprolacton, Methylcaprolacton bzw. Methylvalerolacton sind geeignet. Unter den Dicarbonsäurpolyestern sind insbesondere solche geeignet, die mehrere Alkohole, wie auch gegebenenfalls mehrere Carbonsäuren enthalten können. Besonders geeignet sind Mischpolyester, aus Adipinsäure und/oder Sebacinsäure mit 2 bis 4 verschiedenen, vorzugsweise längerkettigen (≧$C_4$)-Diolen. Besonders geeignete Diole sind Hexan-1,6-diol, Butan-1,4-diol und Neopentylglykol.

Die zur Carbonatverlängerung eingesetzten Polyether haben Molekulargewichte von 800 bis 3.000, vorzugsweise 1.000 bis 2.500, insbesondere 1.000 bis 2.000. Polyether auf Basis von Tetrahydrofuran (Oxytetramethylensegmente aufweisende Diole) sind bevorzugt. Es können auch Copolyether verwendet werden, welche neben Oxytetramethylengruppen Oxyethylen- oder Oxypropylengruppen besitzen.

Die Herstellung der erfindungsgemäßen Polyurethan(harnstoffe) erfolgt nach dem sogenannten NCO-Prepolymerverfahren in zwei Stufen. Hierzu wird zunächst das Makrodiol in Lösung oder in der Schmelze mit dem Diisocyanat zu einem NCO-Prepolymeren umgesetzt. Die Synthese der NCO-Prepolymeren in Lösungsmitteln, insbesondere in hochpolaren Lösungsmitteln wie Dimethylformamid oder bevorzugt Dimethylacetamid, wie sie anschließend auch in der Kettenverlängerungsreaktion eingesetzt werden, ist eine bevorzugte Ausführungsform. Als Lösungsmittel eignen sich auch die polaren Lösungsmittel Dimethylsulfoxid, N-Methylpyrrolidon, 1,3-Dimethyl-2-imidazolidinon oder N-Methylcaprolactam. Vorzugsweise werden Dimethylformamid und/oder Dimethylacetamid verwendet.

Besonders günstig ist die NCO-Prepolymersynthese in Gegenwart von Katalysatoren durchzuführen. Geeignete Katalysatoren sind Lewis-Säure-Katalysatoren wie Organozinncarboxylate, -halogenide, anorganische Salze anorganischer Säuren, Einschubkatalysatoren wie Organozinnalkoholate, -β-dicarbonylverbindungen, -oxide, -mercaptide, -sulfide, Organoaminzinnverbindungen, -phosphinzinnverbindungen, sowie Lewis-Basen-Katalysatoren, wie tertiäre Amine, Phosphine, Pyridine. Vorzugsweise werden Dibutylzinndilaurat (Desmorapid® Z) oder Diazobicyclooctan (DABCO®) eingesetzt. Wirksame Katalysatoren sind auch alkalisch wirkende Salze, z.B. NaOH oder Natriumphenolat, wie es zur Carbonat-Umesterung eingesetzt wird. Verbleibt der Katalysator im Blockdiol, so sind solche Makrodiole sehr reaktiv, auch ohne den Zusatz von weiteren Katalysatoren.

Bei der Synthese der erfindungsgemäßen Elasthane werden die üblichen aromatischen Diisocyanate gegebenenfalls in Abmischung mit geringen Anteilen von aliphatischen Diisocyanaten, verwendet. Besonders brauchbare Ergebnisse werden mit den nachstehenden Diisocyanaten erhalten: mit 2,4-Toluylendiisocyanat sowie entsprechenden Isomerengemischen, insbesondere aber mit 4,4'-Diphenylmethan-diisocyanat bzw. entsprechenden Isomerengemischen mit untergeordneten Mengen an 2,4'- und/oder 2,2'-Isomeren.

Selbstverständlich ist es möglich, Mischungen von aromatischen Diisocyanaten zu verwenden. Als Mischungskomponenten sind weiterhin beispielsweise (cyclo)aliphatische Diisocyanate, wie Hexamethylendiisocyanat, Isophorondiisocyanat, Dicyclohexylmethandiisocyanat oder trans-1,4-Cyclohexandiisocyanat geeignet.

Die Konzentration der ausgewählten Katalysatoren liegt bevorzugt zwischen 0,10 und 0,005 Gew.-%, bezogen auf die Menge des eingesetzten Makrodiols a). Die Reaktionstemperatur bei der erfindungsgemäßen Prepolymersynthese sollte 100 °C nicht überschreiten und liegt bevorzugt zwischen 50 und 80 °C. Als besonders vorteilhaft hat es sich erwiesen, die Reaktionszeit möglichst kurz zu wählen, sie liegt üblicherweise zwischen 40 und 70 Minuten für die Herstellung des NCO-Prepolymers in der Schmelze und zwischen 40 und 90 Minuten bei der Herstellung des NCO-Prepolymers in Lösung. Wird die Herstellung des NCO-Prepolymers in Lösung durchgeführt, so liegt die Konzentration des NCO-Prepolymer-Farbstoffs vorzugsweise zwischen 50 und 90 %, besonders bevorzugt zwischen 60 und 80 %. Die Mitverwendung der Katalysatoren verkürzt nicht nur - erwartungsgemäß - die Reaktionszeit, sondern ergibt überraschenderweise eine verbesserte Lagerstabilität der Lösungen gegen Verpasten. Es ist jedoch zweckmäßig, die Katalysatorkonzentration stark zu begrenzen, da bei zu hoher Katalysatorkonzentration bei hohen Temperaturen ein beschleunigter Polymerabbau erfolgen kann (z.B. unter den Bedingungen der Heat Distortion Temperatur-Messungen bei hohen Temperaturen).

In der zweiten Stufe der Polyurethan(harnstoff)-Synthese werden die gewünschten Harnstoffgruppen durch Diamin-Kettenverlängerungsreaktion mit den NCO-Prepolymeren hergestellt. Die in der Prepolymerstufe synthetisierten Makrodiisocyanate werden hierzu in Lösung mit (cyclo)aliphatischen Diaminen e) umgesetzt. Die nachstehenden Diamine sind beispielsweise gut geeignet: Ethylendiamin, 1,2-Propylendiamin, Tetramethylendiamin, 1,3-Diaminocyclohexan, Piperazin, N-Methyl-ethylendiamin oder Gemische dieser Diamine. Bevorzugt wird Ethylendiamin als überwiegendes Kettenverlängerungsmittel, gegebenenfalls in Abmischung mit bis zu 30 % pro Diaminen der obengenannten Art eingesetzt.

Die Kettenverlängerungsreaktion erfolgt bevorzugt unter Verwendung hochpolarer Lösungsmittel, wie Dimethylsulfoxid, N-Methylpyrrolidon, vorzugsweise jedoch Dimethylformamid oder insbesondere Dimethylacetamid, und bevorzugt in Gegenwart von $CO_2$ (suspendierte Diamin/Kohlensäuresalze in den Lösungsmitteln). Durch Mitverwendung einer geringen Menge an Monoaminen oder auch an Monoisocyanaten während der Kettenverlängerung kann das gewünschte Molekulargewicht begrenzend eingestellt werden.

Bekannte Kettenabbrecher sind z. B. Diethylamin, Dibutylamin, ferner N-Dialkylaminoalkylen-Amine oder asymmetrisches Dimethylhydrazin. Eine besonders viskositätsstabilisierende Wirkung weisen ausgewählte cycloaliphatische oder heterocyclische Verbindungen auf, z. B. 3-Methylcyclohexylamin, das 3,3,5-Trimethyl-1-azacycloheptan (TMD-Imin), 1-Amino-3,3,5-trimethyl-cyclohexan, das N-Cyclohexyl-N-methylamin oder Dicyclohexylamin (vgl. DE-A1-3 932 948). Diese Abbrecher werden in Mengen bis maximal 5 Mol-% der insgesamt vorhandenen NCO-Gruppen eingesetzt, wobei ihre Mengen durch die gewünschte Endviskosität begrenzt sind. Die in DE-A1-3 932 948 beanspruchten Verbindungen sind auch bei den carbonatverknüpften, Blockdiol enthaltenden Elastanen von auffällig viskositätsstabilisierender Wirkung. Auch ein Einbau von heterocyclischen Verbindungen, wie 4-Amino-2,2,6,6-tetramethyl-piperidin, ergibt viskositätsstabilere, besonders aber verfärbungsstabile Lösungen. Die Kettenabbrecher können auch als Isocyanatderivate der genannten primären Amine eingesetzt werden, z. B. als 3-Methylcyclohexylisocyanat.

Die für den bevorzugten Trockenspinnprozeß notwendige Viskosität der Elastomerlösungen liegt allgemein im Bereich von 30 bis 500 Pa•sec bei 20°C, wobei die Konzentration der Elastomerspinnlösung üblicherweise zwischen 18 und 40 Gew.-%, vorzugsweise 22 bis 38 Gew.-%, beträgt. Im Trockenspinnprozeß können die Lösungen mit Viskositäten von mindestens 30 Pa•sec (bei 20°C) durch Düsen in einen auf etwa 150 bis 250°C beheizten, etwa 4 bis 10 m langen Schacht, in den auf etwa 150°C bis 350°C beheizte Luft, inerte Gase, wie Stickstoff, oder auch überhitzter Wasserdampf (vgl. die eigene, nicht vorveröffentlichte DE-A1-3 912 510) eingeblasen wird, versponnen werden. Diese Spinnverfahren benutzen im allgemeinen weniger viskose Lösungen, sind aber weniger bevorzugte Spinnverfahren.

Die nach dem erfindungsgemäßen Verfahren hergestellten Elastanfasern können die für verschiedene Zwecke dienenden, üblichen Additive in üblichen Mengen enthalten. Genannt seien beispielsweise Antioxidantien, Lichtschutzmittel, Schönungsfarbstoffe, Pigmente, Färbeadditive, Antistatika, Fließverbesserer, abhäsiv wirksame Zusätze, wie Magnesium-, Kalzium-, Lithium-, Zink- und/oder Aluminium-stearate oder Zinkoxide, Magnesium/Zink-Mischoxide oder Kalziumoxide, für Stabilisierung von Polyether- und Polyesterelastanen gegen Chlorabbau.

Beispiel 1

Synthese der höhermolekularen, carbonatgruppenverknüpften Block-Diole

1a) Zweiblockpolyester HO⟨200HN⟩-OCOO-⟨200HN⟩OH

| | |
|---|---|
| Polyesterdiol 200 HN (auf Basis Adipinsäure/Hexandiol-1,6/Neopentylglykol (Verhältnis der Diole 65:35) Molekulargewicht 2.000) | 1.993 g (1 Stunde bei 100°C im Hochvakuum entwässert) |
| Diphenylcarbonat | 107 g |
| Ionol (Stabilisator) | 0,3 g |
| Natriumphenolat (Katalysator) | 0,12 g |

Die Ausgangsverbindungen werden unter Stickstoff bei 150°C 1,5 Stunden aufgeschmolzen und vermischt. Anschließend wird auf 130°C abgekühlt, Hochvakuum angelegt und jeweils 30 Minuten bei 130°C, 140°C, 150°C, 160°C, 170°C und 105 Minuten bei 180°C im Hochvakuum aufgereinigt.

| | |
|---|---|
| Ausbeute: | 1.776 g |
| abdestilliertes Phenol: | 95 g |
| OH-Zahl: | 26,6/26,7 |
| Säurezahl: | <0,1 |
| Molekulargewicht: | 4.200 g/Mol (nach OH-Endgruppenanalyse) |

1b) Dreiblockpolyester HO⟨200HN⟩-OCOO-⟨200HN⟩-OCOO-⟨200HN⟩OH

| | | |
|---|---|---|
| I | Polyesterdiol 200HN<br>Diphenylcarbonat<br>Na-Phenolat (Katalysator)<br>Ionol (Stabilisator) | 2.982 g<br>642 g<br>0,72 g<br>0,45 g |
| II | Polyesterdiol 200HN<br>Na-Phenolat<br>Ionol | 6.024 g<br>0,36 g<br>0,9 g |
| III | Toluolsulfonsäure | 1,71 g<br>9.652,14 g |

Ansatz I:
PES 200HN wird bei 120 °C im Hochvakuum 1 Stunde entwässert (Kühlfalle, Trockeneis), mit $N_2$ belüftet, bei 100 °C Diphenylcarbonat, Na-Phenolat und Ionol zugesetzt. Bei 150 °C Innentemperatur wird 1,5 Stunden unter $N_2$ gerührt, auf 110 °C abgekühlt, Hochvakuum angelegt, auf 120 bis 140 °C aufgeheizt und solange destilliert, bis kein Phenol mehr vorhanden ist. Danach mit $N_2$ belüften. Abdestillierte Menge: 268 g (überwiegend Phenol).

Zu Ansatz I (Polyester-bis-phenylcarbonat) wird bei 100 °C Ansatz II hinzugegeben und 1,5 Stunden bei 150 °C unter $N_2$ gerührt und auf 100 °C abgekühlt. Nun wird Hochvakuum angelegt und anschließend 30 Minuten bei 130 °C, 30 Minuten bei 140 °C, 30 Minuten bei 150 °C, 30 Minuten bei 160 °C, 30 Minuten bei 170 °C, 105 Minuten bei 180 °C destilliert bis kein Phenol mehr entweicht.

Mit $N_2$ belüften, auf 100 °C abkühlen lassen, mit Toluolsulfonsäure (Ansatz III) versetzen, 15 Minuten verrühren und Produkt warm abfüllen.

| | |
|---|---|
| Abdestillierte Menge:<br>Ausbeute: | 277,6 g<br>8.860 g |

Das Produkt (Sumpf) wird über einen Dünnschichtverdampfer aufgereinigt.

| | |
|---|---|
| OH-Zahl:<br>Säurezahl:<br>Molekulargewicht: | 19,5<br>0,4<br>5.758 g/Mol |

1c) Dreiblock-Ester/Ether/Ester HO⟨200HN⟩-OCOO-⟨T.1000⟩-OCOO-⟨200HN⟩OH

| Stufe I) (Bisphenylcarbonat-Zwischenstufe) | |
|---|---|
| Terathane® 1000 (T.1000) (Polyetherdiol auf Basis Tetramethylenoxid mit Molekulargewicht 1.000)<br>Diphenylcarbonat<br>Na-Phenolat<br>Ionol | 6.750 g<br><br>2.889 g<br>3,24 g<br>2,07 g |

Terathane® 1000 wird 1 Stunde bei 120 °C im Hochvakuum [0,21-0,35 mbar] entwässert. Anschließend wird mit $N_2$ belüftet und bei 100 °C Diphenylcarbonat, Na-Phenolat und Ionol zugesetzt. Nach 1,5-stündigem Rühren bei 150 °C wird auf 110 °C abgekühlt, Hochvakuum angelegt und 6 Stunden bei 110 °C bis 140 °C Phenol abdestilliert.

| | |
|---|---|
| Abdestillierte Menge: | 1.301 g. |

| Stufe II) Umsetzung des Polyether-bisphenylcarbonats mit weiterem (Ester)-Makrodiol | |
|---|---|
| Polyesterdiol 200HN | 26.406 g |
| Na-Phenolat | 1,62 g |
| Ionol | 4,05 g |

Zu dem Endprodukt aus Ansatz I gibt man 26.406 g entwässertes Polyesterdiol 200HN, Na-Phenolat und Ionol. 1,5 Stunden wird bei 150 °C unter $N_2$ gerührt, anschließend auf 100 °C abgekühlt und Hochvakuum angelegt. Jeweils 30 Minuten wird bei 130 °C, 140 °C, 150 °C, 160 °C, 170 °C und 105 Minuten bei 180 °C Phenol abdestilliert. Abdestillierte Menge: 1.221 g. Es wird auf 100 °C abgekühlt und mit p-Toluol-Sulfonsäure (7,65 g) abgestoppt.

Das Rohprodukt wird über den Dünnschichter bei 180 °C im Hochvakuum (ca. 0,15 mbar) aufgereinigt.

| | |
|---|---|
| OH-Zahl: | 22,1 |
| Säurezahl: | <0,1 |
| Molekulargewicht: | 5.068 g/Mol |

1d) Dreiblock-Ester/Ether/Ester-Diol HO⟨200HN⟩-OCOO-⟨T.2000⟩-OCOO-⟨200HN⟩OH

| Stufe I) | |
|---|---|
| Terathane® 2000 (T.2000) (Polyetherdiol auf Basis von Polytetramethylenoxid mit Molekulargewicht 2.000) | 1.033 g |
| Diphenylcarbonat | 214 g |
| Na-Phenolat | 0,24 g |
| Ionol | 0,15 g |

Terathane® 2000 wird 1 Stunde bei 120 °C im Hochvakuum entwässert. Anschließend wird mit $N_2$ belüftet und bei 100 °C Diphenylcarbonat, Na-Phenolat und Ionol zugesetzt. Nach 1,5-stündigem Rühren bei 150 °C wird auf 110 °C abgekühlt, Hochvakuum angelegt und 45 Minuten bei 130 °C Phenol abdestilliert. Abdestillierte Menge: 98 g.

| Stufe II) | |
|---|---|
| Polyester 200HN | 1.995 g |
| Na-Phenolat | 0,12 g |
| Ionol | 0,3 g |

Zu dem Endprodukt aus Ansatz I gibt man Ansatz II. 1,5 Stunden wird bei 150 °C unter $N_2$ gerührt, anschließend auf 100 °C abgekühlt und Hochvakuum angelegt. Jeweils 30 Minuten wird bei 130 °C, 140 °C, 150 °C, 160 °C, 170 °C und 105 Minuten bei 180 °C Phenol abdestilliert. Abdestillierte Menge: 109 g. Es wird auf 100 °C abgekühlt und mit 0,57 g Toluol Sulfonsäure nach Belüften mit $N_2$ abgestoppt.

Das Rohprodukt wird über den Dünnschichter bei 180 °C im Hochvakuum (ca. 0,15 mbar) aufgereinigt.

| | |
|---|---|
| OH-Zahl: | 18,4/18,7 |
| Säurezahl: | <0,1 |
| Molekulargewicht: | 6.038 g/Mol |

Beispiel 2 (Vergleich)

Polyurethan(harnstoff)-Synthesen:

500 g des Blockdesmophens HO⟨200HN⟩-OCOO-⟨T.1000⟩-OCOO-⟨200HN⟩OH mit Molekulargewicht 5.068 g/Mol (Synthese siehe Beispiel 1c)) wurden mit 315,9 g Dimethylacetamid (DMAc) und 61,6 g Diphenylmethan-4,4'-Diisocyanat (MDI) versetzt (Molverhältnis OH/NCO = 1:2,5). Anschließend wurde unter Rühren ca. 130 Minuten auf 50 °C erwärmt bis der NCO-Gehalt des Prepolymeren 2,08 % betrug.

Eine Mischung aus 7,2 g Ethylendiamin (EDA) und 1.361 g DMAc wurde hergestellt und mit 15 g $CO_2$ versetzt. Zu dieser Carbamat-Suspension wurden unter Rühren 700 g der Prepolymerlösung innerhalb von 15 Minuten zugesetzt. Man erhält eine homogene klare Elastomerlösung mit einem Feststoffgehalt von 23 %, einer Lösungsviskosität von 48,3 Pa·s/25 °C und einer inhärenten Viskosität von 1,17 dl/g.

Zu der viskosen Polymerlösung wurden, bezogen auf Polyurethan-Feststoff, 0,3 Gew.-% Mg-Stearat, 1 Gew.-% Cyanox® 1790, 0,5 Gew.-% Tinuvin® 622, 0,5 Gew.-% des Polyethersiloxans Silwet® L7607 (Union Carbide Corp., USA), zugesetzt. Diese Polymerlösung wurde nach dem Trockenspinnverfahren versponnen.

So wie im Beispiel 2 die Polymermethan(harnstoff)-Herstellung beschrieben ist, wurde auch in den Beispielen 3 bis 15 verfahren. Der Übersicht wegen wurden deren Herstellungsansätze in Tabelle 1 zusammengefaßt.

**Tabelle 1** (Beschreibung der Abkürzungen siehe nächste Seite)

| | | Prepolymerbildung: | | | | | | | Kettenverlängerung: | | | | | | |
|---|---|---|---|---|---|---|---|---|---|---|---|---|---|---|---|
| Beispiel | Makrodiol-Typ | Menge (g) | DMAc (g) | MDI (g) | Kat. (%) | T (°C) | Rkz. (min) | NCO-fest (%) | PP-Menge (g) | DMAc (g) | EDA (g) | $CO_2$ (g) | Fest. (%) | Lsg.v. (Pa·s/ 25°C) | η (dl/g) |
| 2 | A | 500 | 316 | 61,6 | - | 50 | 130 | 2,08 | 700 | 1361 | 7,2 | 15 | 23 | 48,3 | 1,17 |
| Vergleich | | | | | | | | | | | | | | | |
| 3 | A | 500 | 249 | 81,4 | 0,005 | 50 | 45 | 2,97 | 700 | 1567 | 11,16 | 23 | 23 | 47 | 1,26 |
| 4 | A | 500 | 252 | 88,8 | 0,005 | 50 | 90 | 3,33 | 700 | 1572 | 12,6 | 26 | 22,7 | 55,4 | 1,37 |
| 5 | B | 500 | 306 | 43,5 | - | 50 | 90 | 1,27 | 700 | 1351 | 4,36 | 7 | 22,4 | 86 | 1,15 |
| Vergleich | | | | | | | | | | | | | | | |
| 6 | B | 500 | 315 | 60,04 | 0,002 | 50 | 90 | 2,15 | 700 | 1363 | 7,4 | 16 | 22,5 | 54 | 1,17 |
| 7 | B | 500 | 244 | 68,3 | 0,005 | 50 | 90 | 2,67 | 600 | 1341 | 8,6 | 14 | 22 | 66,4 | 1,14 |
| 8 | C | 500 | 318 | 64,5 | 0,002 | 50 | 90 | 2,25 | 700 | 1365 | 7,75 | 16 | 22,6 | 133,9 | 1,38 |
| 9 | C | 500 | 222 | 71,6 | 0,05 | 55 | 60 | 2,66 | 700 | 1562 | 10 | 20 | 22 | 48,3 | 1,37 |

**Tabelle 1** (Beschreibung der Abkürzungen siehe nächste Seite)
(Fortsetzung)

| Beispiel | Prepolymerbildung: Makrodiol Typ | Makrodiol-Menge (g) | DMAc (g) | MDI (g) | Kat. (%) | T (°C) | Rkz. (min) | NCO-fest (%) | Kettenverlängerung: PP-Menge (g) | DMAc (g) | EDA (g) | $CO_2$ (g) | Fest. (%) | Lsg.v. (Pa·s/25°C) | η (dl/g) |
|---|---|---|---|---|---|---|---|---|---|---|---|---|---|---|---|
| 10 | C | 500 | 248 | 78,2 | 0,1 | 50 | 60 | 2,99 | 700 | 1567 | 11,24 | 23 | 22,8 | 69 | 1,37 |
| 11 | C | 500 | 329 | 85 | 0,002 | 50 | 90 | 3,37 | 700 | 1378 | 11,6 | 24 | 22,8 | 233 | 1,75 |
| 12 | D | 500 | 332 | 89,4 | 0,01 | 50 | 60 | 3,14 | 700 | 1375 | 10,8 | 22 | 22 | 150 | 1,54 |
| 13 Vergleich | E | 7000 | 2158 | 1630,5 | - | 50 | 75 | 2,16 | 8500 | 22906 | 140,6 | 206 | 20 | 218 | 1,67 |
| 14 Vergleich | F | 1200 | 586 | 167,5 | - | 50 | 53 | 1,62 | 1500 | 3315 | 11,88 | 24 | 22 | 65 | 1,22 |
| 15 Vergleich | F | 1200 | 642 | 299 | 0,1 | 50 | 30 | 4,34 | 1500 | 3315 | 11,9 | 24 | 22 | 39 | 1,07 |

Beschreibung der Abkürzungen in Tabelle 1

Makrodiol: (Δ = Carbonatgruppe

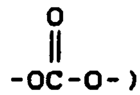

| | |
|---|---|
| A = | HO-200HNΔT.1000Δ200HN-OH, MG 5068, s. Beispiel 1c |
| B = | HO-200HNΔT.2000Δ200HN-OH, MG 6038, s. Beispiel 1d |
| C = | HO-200HNΔ200HNΔ200HN-OH, MG 5758, s. Beispiel 1b |
| D = | HO-200HNΔ200HN-OH, MG 4200, s. Beispiel 1a |
| E = | Polyesterdiol 200HN auf Basis Adipinsäure, Hexandiol, Neopentylglykol, OH-Zahl 56.3, MG 1988 |
| F = | Polyesterdiol 330HBN auf Basis Adipinsäure, Hexandiol, Butandiol, Neopentylglykol, OH-Zahl 33,8, MG 3313 |
| DMAc: | Dimethylacetamid |
| MDI: | Diphenylmethan-4,4'-Diisocyanat |
| Kat.: | Menge des Katalysators Desmorapid®Z in %, bezogen auf das eingesetzte Makrodiol |
| T: | Reaktionszeit |
| Rkz: | Reaktionstemperatur |
| NCO-fest: | NCO-Festgehalt des Prepolymeren |
| PP-Menge: | Prepolymermenge |
| EDA: | Ethylendiamin |
| $CO_2$: | $CO_2$-Trockeneismenge |
| Fest.: | Feststoffgehalt der Polymethanharnstofflösung |
| Lsg.v.: | Lösungsviskosität der Polymerlösung |
| $\eta$: | inhärente Viskosität gemessen mit 5 g PUH-Feststoff/l DMAC bei 30 °C |

Meßmethoden:

Die in den Beispielen erwähnten Meßgrößen wurden wie folgt bestimmt: Die inhärente Viskositäten der Elastomeren wurde in verdünnter Lösung der Konzentration c) von 0,5 g/100 ml Dimethylacetamid bei 30 °C durch Bestimmung der relativen Viskosität $\eta_r$ gegenüber dem reinen Lösungsmittel bestimmt und nach der Formel

$$\eta_1 = \frac{t_1}{t_0}$$

$t_1$: Durchlaufzeit (sec) der Polymerlösung

$t_0$: Durchlaufzeit (sec) des reinen Lösungsmittels

$$\eta = \frac{\ln \cdot \eta_R}{c.}$$

umgerechnet.

Die Feinheitsfestigkeit wurde in Anlehnung an DIN 53 815 bestimmt (cN/dtex).

Die Höchstzugkraftdehnung, in % erfolgte ebenfalls nach DIN 53 815.

Der Modul bei 100 % bzw. 300 % erstmaliger Dehnung wurde bei einer Dehnungsgeschwindigkeit von $4 \times 10^{-3}$ Meter pro Sekunde in cN/dtex bestimmt.

Die Restdehnung wurde nach fünfmaliger Ausdehnung auf 300 % und nach einer Erholungszeit von 60 Sekunden bestimmt.

Die Messung von Heat Distortion Temperatur (HDT), Heißreißzeit (HRZ) und Heißwasserspanungsabfall (HWSA) erfolgt nach Methoden, die in Chemiefasern/Textilindustrie, Januar 1978, Heft 1/78, 28./80. Jahrgang auf Seite 44-49 beschrieben sind. Entsprechende Angaben finden sich auch in DE-OS 2 542 500 (1975).

Zu den viskosen Polymerlösungen der Beispiele 3-15 wurden die gleichen Additive, wie sie im Beispiel 2 ausführlich beschrieben sind, in gleichen Konzentrationen zugesetzt. Alle Polymerlösungen wurden nach dem Trockenspinnverfahren versponnen. Die textilen Daten der daraus erhaltenen Elasthanfäden sind in Tabelle 2 zusammengefaßt.

**Tabelle 2** Mechanische und thermische Daten der Elasthanfäden aus den in Tabelle 1 beschriebenen Polymerlösungen

(Δ = Carbonatgruppe $-O\underset{\underset{O}{\|}}{C}O-$)

| Beispiel | Makrodiol | Titer (dtex) | FF-ist (cN/dtex) | HZKD (%) | R100 (cN/dtex) | R300 (cN/dtex) | HDT (°C) | HRZ (sec) | ε (%) | OH:NCO | NCO fest (%) | Kat. (%) |
|---|---|---|---|---|---|---|---|---|---|---|---|---|
| 2 (Vergl.) | HO-200HNΔT.1000Δ200HN-OH | 162 | 6,74 | 593 | 0,030 | 0,085 | 167 | 47 | 13 | 1:2,5 | 2,05 | - |
| 3 | HO-200HNΔT.1000Δ200HN-OH | 151 | 7,42 | 622 | 0,037 | 0,099 | 180 | 67 | 18 | 1:3,3 | 2,97 | 0,005 |
| 4 | HO-200HNΔT.1000Δ200HN-OH | 154 | 6,91 | 600 | 0,042 | 0,114 | 186 | 105 | 18 | 1:3,6 | 3,33 | 0,005 |
| 5 (Vergl.) | HO-200HNΔT.2000Δ200HN-OH | 177 | 6,47 | 688 | 0,021 | 0,053 | 171 | 32 | 11 | 1:2,1 | 1,27 | - |
| 6 | HO-200HNΔT.2000Δ200HN-OH | 160 | 6,81 | 637 | 0,029 | 0,080 | 190 | 123 | 13 | 1:2,9 | 2,15 | 0,002 |
| 7 | HO-200HNΔT.2000Δ200HN-OH | 152 | 7,76 | 706 | 0,035 | 0,085 | 188 | 165 | 16 | 1:3,3 | 2,67 | 0,005 |
| 8 | HO-200HNΔ200HNΔ200HN-OH | 162 | 4,56 | 543 | 0,043 | 0,114 | 184 | 47 | 11 | 1:2,9 | 2,25 | 0,002 |
| 9 | HO-200HNΔ200HNΔ200HN-OH | 175 | 6,26 | 604 | 0,030 | 0,085 | 179 | 54 | 10 | 1:3,3 | 2,66 | 0,05 |

**Tabelle 2** Mechanische und thermische Daten der Elasthanfäden aus den in Tabelle 1 beschriebenen Polymerlösungen

(Fortsetzung)

| Beispiel | Makrodiol | Titer (dtex) | FF-ist (cN/dtex) | HZKD (%) | R100 (cN/dtex) | R300 (cN/dtex) | HDT ($^0$C) | HRZ (sec) | ε (%) | OH:NCO | NCO fest (%) | Kat. (%) |
|---|---|---|---|---|---|---|---|---|---|---|---|---|
| 10 | HO-200HNΔ200HNΔ200HN-OH | 168 | 6,57 | 646 | 0,034 | 0,091 | 176 | 50 | 10 | 1:3,6 | 2,99 | 0,1 |
| 11 | HO-200HNΔ200HNΔ200HN-OH | 150 | 6,84 | 652 | 0,046 | 0,110 | 188 | 89 | 15 | 1:3,6 | 3,37 | 0,002 |
| 12 | HO-200HNΔ200HN-OH | 150 | 5,29 | 522 | 0,061 | 0,116 | 185 | 70 | 15 | 1:3,0 | 3,14 | 0,01 |
| 13 (Vergl.) | HO-200HN-OH | 154 | 5,89 | 444 | 0,067 | 0,288 | 175 | 40 | 20 | 1:1,85 | 2,7 | - |
| 14 (Vergl.) | HO-330HBN-OH | 168 | 6,11 | 534 | 0,029 | 0,099 | 163 | 19 | 7 | 1:1,85 | 1,62 | - |
| 15 (Vergl.) | HO-330HBN-OH | 168 | 6,38 | 556 | 0,052 | 0,166 | 178 | 18 | 24 | 1:3,3 | 4,34 | 0,1 |
| 16 (Vergl.) | Langzugtype Handelsprodukt A) | 723 | 2,37 | 649 | 0,031 | 0,070 | 169 | 20 | 13 | | | - |

A) LYCRA® 128 Merge 393402N8A

Beschreibung der Abkürzungen in Tabelle 2

FF-ist: auf den Ausgangstiter bezogene Bruchfestigkeit
HZKD: Bruchdehnung

| | |
|---|---|
| R100 R300 | Kraftaufnahme bei erstmaliger 100 bzw. 300 % Dehnung |
| HDT: | Heat distortion temperature |
| HRZ: | Heißreißzeit |
| $\epsilon$: | Restdehnung nach fünfmaliger Dehnung auf 300 % |
| Kat.: | Menge des Katalysators Desmorapid®Z in % bezogen auf das eingesetzte Makrodiol |

Aus Tabelle 2 werden die hervorragenden Eigenschaften der erfindungsgemäß eingesetzten Blockdesmophene deutlich, wobei Dehnungen bis über 700 % erreicht werden. Auch werden Bruchfestigkeiten erzielt, die höher sind, als die eines gängigen Elasthans (Beispiel 13, Vergleich). (Die Messung der Bruchdehnung erfolgte dabei unter Kompensation des Schusses der Fäden aus der Klammer bei hohen Kräften).

So konnten auch hervorragende Thermostabilitäten (HDT bis zu 190 °C!, HRZ bis zu 165 sec!) durch das erfindungsgemäße Verfahren erzielt werden, wobei trotz des hohen Hartsegmentanteils die Restdehnungen unter 20 % bleiben und günstiger sind als bei dem Einsatz vergleichbarer Makrodiolen ohne den erfindungsgemäß charakterisierten Blockaufbau.

Deutlich wird aber auch der besondere Vorteil des erfindungsgemäßen Prepolymerverfahrens (möglichst kurze Reaktionszeiten, mit Katalysator, hoher MDI-Gehalt). So nehmen trotz der hohen MDI-Menge sowohl die Bruchfestigkeit (FF-ist), Moduli (R100, R300) als auch die Bruchdehnung (HZKD) in unerwarteter Weise gleichzeitig zu.

Ein weiterer Vorteil der erfindungsgemäßen Herstellung ist, daß die Lösungen farblos bleiben. Setzt man die hohen MDI-Mengen ohne Katalysator um, tritt eine schnelle Vergilbung der Lösung ein.

Alle nach dem erfindungsgemäßen Prepolymerverfahren hergestellten Elasthanlösungen waren 2 - 5 Tage länger stabil als ohne Katalysator hergestellte Elasthanlösungen. Die Elasthanlösungen, die ohne Katalysator hergestellt wurden, verpasteten bei hohen MDI-Gehalten einen Tag nach ihrer Herstellung.

In den Beispielen 14 und 15 ist zum Vergleich ein höhermolekulares Polyesterdiol mit Molekulargewicht 3.300 eingesetzt worden. Im Beispiel 14 wurde der Polyester unter allgemein üblichen Bedingungen ohne Katalysator mit einem OH : NCO-Verhältnis von 1 : 1,85 eingesetzt. Im Beispiel 15 wurde das erfindungsgemäße Prepolymerverfahren, Katalysator, hoher MDI-Gehalt, angewendet. Deutlich wird, daß zwar die HZKD, die Festigkeit und die Moduli gegenüber dem Beispiel 14 zunehmen, der hohe MDI-Gehalt verursacht jedoch eine hohe Restdehnung von 24 %. Außerdem wird bei Einsatz dieses Polyesterdiols mit MG 3.300 bereits die Urethanrückspaltung, verursacht durch den Katalysator, deutlich. Das bedeutet, daß das erfindungsgemäße Prepolymerverfahren erst sinnvoll für ein Makrodiol mit einem Molekulargewicht größer als 3.300 anwendbar ist.

Tabelle 3

| Heißwasserspannungsabfall (HWSA) | | | |
|---|---|---|---|
| Beispiel | Ⓐ in Luft ($10^{-3}$cN/dtex) | Ⓑ in Wasser/95 °C ($10^{-3}$cN/dtex) | Ⓒ in Luft entlastet, bleibende Dehnung (%) |
| 2 (Vergl.) | 25,3 | 14,3 | 36 |
| 3 | 31,7 | 18 | 41 |
| 4 | 34,1 | 18,8 | 42 |
| 5 (Vergl.) | 17 | 9,7 | 40 |
| 7 | 29,2 | 17,4 | 34 |
| 8 | 33,1 | 21,7 | 30 |
| 9 | 24,7 | 15,8 | 33 |
| 10 | 27,2 | 19 | 31 |
| 11 | 45,6 | 29,7 | 22 |
| 16 (Vergl.) | 26,9 | 14,2 | 40 |
| Langzugtype Handelsprodukt A)<br>A) LYCRA® 128 Merge 393 402 N8A | | | |

Aus Tabelle 3 wird ebenfalls ein besonderer Vorteil der nach dem erfindungsgemäßen Prepolymerverfahren hergestellten Elasthane gegenüber im Handel befindlichen Langzugtypen (Beispiel 16) deutlich. Die erfindungsgemäßen Elasthane zeigen nämlich ein verbessertes Verhalten in dem Heißwasserspannungsabfall.

Bestimmung des Heißwasserspannungsabfalls (HWSA):

Zwei Schlingen des zu messenden Fadens mit 100 mm Einspannlänge (Vorspanngewicht 0,0009 cN/dtex) werden bei Normalklima um 100 % gedehnt. Die sich nach 2 Minuten ergebende Fadenspannung (cN/dtex) wird gemessen (Wert Ⓐ ) in Tabelle 3). Der auf 100 % gedehnt gehaltene Faden wird anschließend in Wasser von 95 °C getaucht. Die sich ergebende Spannung nach 3 Minuten wird bestimmt (Wert Ⓑ in Tabelle 3). Danach wird der Faden aus dem Wasserbad genommen und 2 Minuten bei Raumtemperatur belassen. Der in die Einspannklemme gespannte Faden wird nun bis zur Spannungslosigkeit entlastet. Die verbleibende Restdehnung wird bestimmt (Wert Ⓒ in Tabelle 3). Das Elasthan ist umso besser, je höher der Wert Ⓐ und Ⓑ und umso niedriger der Wert Ⓒ ist.

**Patentansprüche**

1. Verfahren zur Herstellung von Elastanfäden durch Umsetzung von Makrodiolen, überschüssigen Mengen an Diisocyanaten in Lösungsmitteln zu einem NCO-Prepolymer und dessen Kettenverlängerung mit Diaminen in Lösungsmitteln und Verspinnung der erhaltenen Lösung, gegebenenfalls unter Zusatz üblicher Additive, dadurch gekennzeichnet, daß
   a) Makrodiole, die im Mittel über 1 bis 4 Carbonatgruppen verknüpft, blockartig aus vorgebildeten, gleichen oder verschiedenen Polyesterdiolen oder aus Polyesterdiolen und Polyetherdiolen aufgebaut sind und ein Molekulargewicht von >3.300 bis 7.000 und einen Schmelzpunkt unter 50 °C aufweisen,
   b) mit organischen Diisocyanaten,
   c) in organischen, inerten Lösungsmitteln und
   d) unter Zusatz von 0,002 bis 0,15 Gew.-%, bezogen auf das Makrodiol a), an Katalysatoren für die OH/NCO-Reaktion

   in einem OH/NCO-Verhältnis von 1 : >2,10 bis 1 : 4,5 umgesetzt werden, daß ein NCO-Prepolymer mit einem NCO-Gehalt von >2,10 bis 4% NCO (bezogen auf den Feststoffgehalt) im NCO-Prepolymer-Feststoff erhalten wird, und
   e) dieses NCO-Prepolymer in einer nachfolgenden Stufe in Lösungsmitteln mittels (cyclo)-aliphatischen Diaminen, gegebenenfalls unter Zusatz von Kettenabbrechern, zur viskosen Polyurethan(harnstoff)Elastomerspinnlösung umgesetzt wird und diese anschließend versponnen wird.

2. Verfahren nach Anspruch 1, dadurch gekennzeichnet, daß die eingesetzten Makrodiole a) ein Molekulargewicht von 3.500 bis 6.500 aufweisen und als Diisocyanate b) aromatische, symmetrisch aufgebaute Diisocyanate verwendet werden.

3. Verfahren gemäß den Ansprüchen 1 bis 2, dadurch gekennzeichnet, daß Makrodiole a) mit einem Molekulargewicht von 3.500 bis 6.000 und einem Schmelzpunkt unter 45 °C und als Lösungsmittel c) Dimethylformamid oder Dimethylacetamid eingesetzt werden.

4. Verfahren gemäß den Ansprüchen 1 bis 3, dadurch gekennzeichnet, daß als Diisocyanat b) 4,4'-Diphenylmethandiisocyanat eingesetzt wird.

5. Verfahren gemäß den Ansprüchen 1 bis 4, dadurch gekennzeichnet, daß als Katalysator d) 0,005 bis 0,10 Gew.-% zinnorganischer Katalysator eingesetzt wird.

6. Verfahren gemäß den Ansprüchen 1 bis 5, dadurch gekennzeichnet, daß der NCO-Gehalt im Prepolymer-Feststoff nach der Umsetzung 2,15 bis 3,5 % NCO beträgt.

7. Verfahren gemäß den Ansprüchen 1 bis 6, dadurch gekennzeichnet, daß die carbonatverknüpften, blockartig aufgebauten Makrodiole a) die Blockstrukturen der Typen W bis Z besitzen,

W 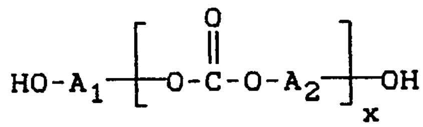

X 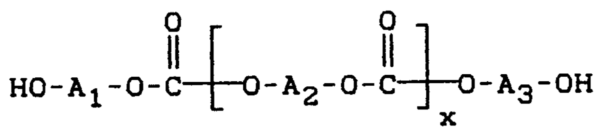

Y 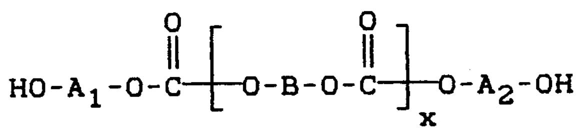

Z 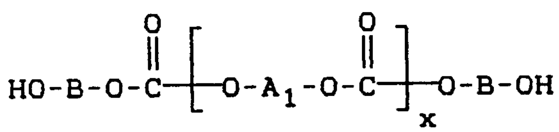 ,

wobei

| | |
|---|---|
| $A_1$, $A_2$, $A_3$ | Reste eines vorgebildeten Polyesterdiols aus Dicarbonsäuren und niedermolekularen Diolen, mit einem Molekulargewicht von jeweils 800 bis 3.500, wobei $A_1 = A_2 = A_3$,, $A_1 = A_2 \neq A_3$ und $A_1 = A_3 \neq A_2$ sein können, |
| B | Reste eines Polyetherdiols auf Basis Polyoxytetramethylendiolen oder seiner Copolyether, mit einem Molekulargewicht von 800 bis 3.000 sind und |
| x | 1, 2, 3 oder 4 ist, aber so gewählt ist, daß im Mittel nicht mehr als vier Carbonatgruppen im Makrodiol a) enthalten sind. |

**8.** Verfahren gemäß Anspruch 7, dadurch gekennzeichnet, daß im Mittel weniger als drei Carbonatgruppen im Makrodiol a) enthalten sind.

**9.** Elastanfäden welche nach dem Verfahren gemäß den Ansprüchen 1 bis 8 erhalten werden.

**Claims**

**1.** A process for the production of elastane filaments by reaction of macrodiols, excess quantities of diisocyanates in solvents to form an NCO prepolymer, chain extension of the NCO prepolymer thus formed with diamines in solvents and spinning of the solution obtained, optionally with addition of typical additives, characterized in that

a) macrodiols which are linked on average by 1 to 4 carbonate groups are synthesized in blocks from preformed, identical polyester diols or from polyester diols and polyether diols and have molecular weights of > 3,300 to 7,000 and a melting point below 50 °C,

are reacted

b) with organic diisocyanates

c) in organic inert solvents and

d) and with addition of 0.002 to 0.15% by weight, based on the macrodiol a), of catalysts for the OH/NCO reaction

in an OH/NCO ratios of 1:>2.10 to 1:4.5 so that an NCO prepolymer having an NCO content of >2.10 to 4% NCO (based on solids) is obtained and

e) in a following step, the NCO prepolymer thus obtained is reacted in solvents with (cyclo)aliphatic diamines, optionally in the presence of chain terminators, to form the viscous polyurethane (urea) elastomer spinning solution which is then spun.

**2.** A process as claimed in claim 1, characterized in that the macrodiols a) used have a molecular weight of 3,500 to 6,500 and aromatic symmetrical diisocyanates are used as the diisocyanates b).

**3.** A process as claimed in claims 1 and 2, characterized in that macrodiols with a molecular weight of 3,500 to 6,000 and a melting point below 45 °C are used and dimethyl formamide or dimethyl acetamide is used as the solvent c).

**4.** A process as claimed in claims 1 to 3, characterized in that 4,4'-diphenylmethane diisocyanate is used as the diisocyanate b).

**5.** A process as claimed in claims 1 to 4, characterized in that 0.005 to 0.10% by weight of organotin catalyst is used as the catalyst d).

**6.** A process as claimed in claims 1 to 5, characterized in that the NCO content of the prepolymer solids after the reaction is 2.15 to 3.5% NCO.

**7.** A process as claimed in claims 1 to 6,, characterized in that the carbonate-linked block-like macrodiols a) have block structures corresponding to formulae W to Z:

W 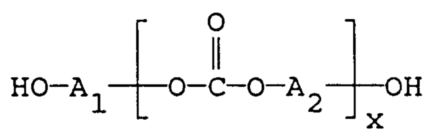

X 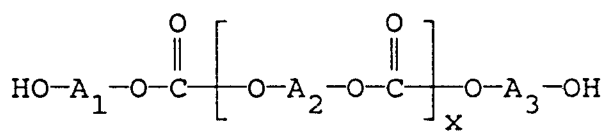

Y 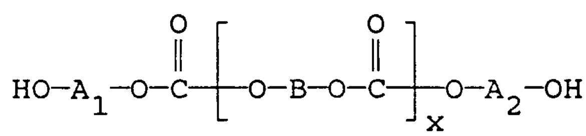

Z 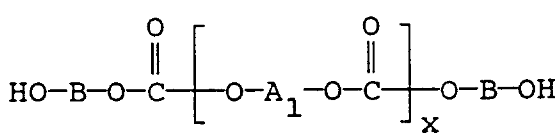

in which

| | |
|---|---|
| $A_1$, $A_2$, and $A_3$ | are residues of a preformed polyester diol of dicarboxylic acids and low molecular weight diols having molecular weights of 800 to 3,500 with $A_1 = A_2 = A_3$, $A_1 = A_2 \neq A_3$ and $A_1 = A_3 \neq A_2$, |
| B | is the residue of a polyether diol based on polyoxytetramethylene diols or a copolyether thereof having a molecular weight of 800 to 3,000 and |
| x = | 1, 2, 3 or 4, but is selected so that on average no more than 4 carbonate groups are present in the macrodiol a). |

**8.** A process as claimed in claim 7, characterized in that the macrodiol a) contains on average less than three carbonate groups.

**9.** Elastane filaments obtained by the process claimed in claims 1 to 8.

## Revendications

1. Procédé de préparation de fils d'élasthane par réaction de macrodiols, de quantités en excès de diisocyanates dans des solvants, pour obtenir un prépolymère NCO et par allongement de chaîne de celui-ci par des diamines dans des solvants et filage de la solution obtenue, éventuellement avec addition d'additifs usuels, caractérisé en ce que :
   a) on fait réagir des macrodiols qui sont constitués de polyesterdiols identiques ou différents, formés au préalable, ou de polyesterdiols et dc polyétherdiols, séquencés, liés en moyenne par 1 à 4 groupements carbonate et qui ont une masse moléculaire >3 300 à 7 000 et un point de fusion inférieur à 50 °C,
   b) avec des diisocyanates organiques,
   c) dans des solvants inertes organiques et
   d) avec addition de 0,002 à 0,15% en masse de catalyseurs pour la réaction OH/NCO, par rapport au macrodiol a)

   à un rapport OH/NCO de 1:>2,10 à 1:4,5, on obtient un prépolymère NCO ayant une teneur en NCO supérieure à 2,10 à 4% de NCO (par rapport à la teneur en matière solide) dans la matière solide du prépolymère NCO, et
   e) on fait réagir ce prépolymère NCO dans une étape ultérieure dans des solvants, au moyen de diamines (cyclo)aliphatiques, éventuellement en ajoutant des agents de rupture de chaîne, pour le transformer en une solution à filer d'élastomère de polyuréthanne(urée) visqueuse et on file ensuite celle-ci.

2. Procédé selon la revendication 1, caractérisé en ce que les macrodiols a) utilisés présentent une masse moléculaire de 3 500 à 6 500 et en ce qu'on utilise en tant que diisocyanates b) des diisocyanates symétriques aromatiques.

3. Procédé selon les revendications 1 et 2, caractérisé en ce que les macrodiols a) possèdent une masse moléculaire de 3 500 à 6 000 et un point de fusion inférieur à 45 °C et en ce qu'on utilise en tant que solvant c) du diméthylformamide ou du diméthylacétamide.

4. Procédé selon les revendications 1 à 3, caractérisé en ce qu'on utilise en tant que diisocyanate b) le 4,4'-diphénylméthanediisocyanate.

5. Procédé selon les revendications 1 à 4, caractérisé en ce qu'on utilise comme catalyseur d) de 0,005 à 0,10% en masse d'un catalyseur organoétain.

6. Procédé selon les revendications 1 à 5, caractérisé en ce que la teneur en NCO de la matière solide du prépolymère s'élève à 2,15 à 3,5% de NCO après la réaction.

7. Procédé selon les revendications 1 à 6, caractérisé en ce que les macrodiols a) séquencés liés par des groupements carbonate ont des structures séquencées des types W à Z,

W 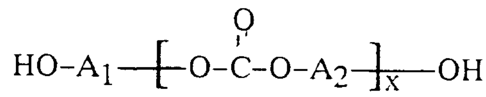

X 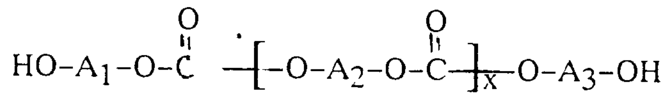

Y 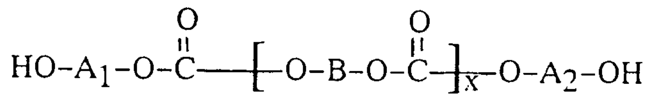

Z 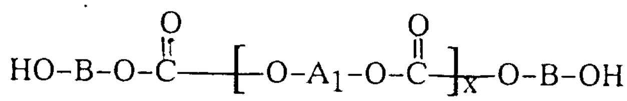

dans lesquelles

- $A_1$, $A_2$, $A_3$ peuvent être des résidus de polyesterdiol formés au préalable à partir d'acides dicarboxyliques et de diols à masse moléculaire faible, ayant une masse moléculaire à chaque fois comprise entre 800 à 3 500, et dans lesquels on peut avoir $A_1 = A_2 = A_3$, $A_1 = A_2 \neq A_3$ et $A_1 = A_3 \neq A_2$,
- B représente des radicaux d'un polyétherdiol à base de polyoxytétraméthylènediols ou de ses copolyéthers, avec une masse moléculaire de 800 à 3 000 et
- x vaut 1, 2, 3 ou 4 mais est choisi de telle façon qu'on a en moyenne pas plus de 4 groupements carbonate dans le macrodiol a).

**8.** Procédé selon la revendication 7, caractérisé en ce que le macrodiol a) contient en moyenne moins de trois groupements carbonate.

**9.** Fils d'élasthane qui ont été obtenus à l'aide du procédé selon les revendications 1 à 8.